# EUROPÄISCHE PATENTSCHRIFT

(11) **EP 3 344 520 B1**
(45) Veröffentlichungstag und Bekanntmachung des Hinweises auf die Patenterteilung: **06.09.2023**
(21) Anmeldenummer: 16741259.2
(22) Anmeldetag: 05.07.2016
(51) Int. Cl.: B62D 15/02, G05D 1/02, G08G 1/14, G08G 1/16

(54) **VERFAHREN UND VORRICHTUNG ZUM FAHRERLOSEN FÜHREN EINES KRAFTFAHRZEUGS INNERHALB EINES PARKPLATZES**
METHOD AND DEVICE FOR CONDUCTING A DRIVERLESS MOTOR VEHICLE IN A CAR PARK
PROCÉDÉ ET DISPOSITIF PERMETTANT DE GUIDER SANS CONDUCTEUR UN VÉHICULE À MOTEUR À L'INTÉRIEUR D'UN PARC DE STATIONNEMENT

(30) Priorität: 03.09.2015 DE 102015216881
(43) Veröffentlichungstag der Anmeldung: 11.07.2018
(73) Patentinhaber: Robert Bosch GmbH, 70442 Stuttgart (DE)
(72) Erfinder: NORDBRUCH, Stefan, 70806 Kornwestheim (DE); MIELENZ, Holger, 73760 Ostfildern (DE)
(86) Internationale Anmeldenummer: PCT/EP2016/065859
(87) Internationale Veröffentlichungsnummer: WO 2017/036640

(56) Entgegenhaltungen:
- EP-A2- 2 695 797
- WO-A1-2016/134827
- DE-A1-102012 021 282
- DE-A1-102012 203 235
- DE-B3-102015 007 531
- US-A1- 2010 156 672
- KYOUNGHWAN AN ET AL: "Cooperative vehicle control system based on fusion map", COMPUTING AND CONVERGENCE TECHNOLOGY (ICCCT), 2012 7TH INTERNATIONAL CONFERENCE ON, IEEE, 3. Dezember 2012 (2012-12-03), Seiten 94-97, XP032421998, ISBN: 978-1-4673-0894-6

## Beschreibung

Die Erfindung betrifft ein Verfahren und eine Vorrichtung zum fahrerlosen Führen eines Kraftfahrzeugs innerhalb eines Parkplatzes sowie einen Parkplatz. Die Erfindung betrifft ferner ein Computerprogramm.

### Stand der Technik

Die Offenlegungsschrift DE 10 2012 222 562 A1 zeigt ein System für bewirtschaftete Parkflächen zur Überführung eines Fahrzeugs von einer Startposition eine Zielposition.

Die Druckschrift "Kyounghwan An et al: "Cooperative Vehicle Control System based on Fusion Map", Computing and Convergence Technology (ICCCT), 2012 7th International Conference on, IEEE, 3. Dezember 2012 (2012-12-03), Seiten 94-97, XP032421998, ISBN: 978-1-4673-0894-6" offenbart ein Verfahren zum autonomen Fahren eines Kraftfahrzeugs innerhalb eines Parkplatzes.

Die Offenlegungsschrift DE 10 2012 203 235 A1 offenbart ein Verfahren zum automatischen Durchführen eines Fahrmanövers mit einem Kraftfahrzeug, wobei die Umgebung des Kraftfahrzeugs mit einem Erfassungssystem insbesondere während der Vorbeifahrt an einer Parklücke erfasst wird, eine Trajektorie berechnet wird, entlang der das Kraftfahrzeug während des Fahrmanövers anhand der erfassten Umgebungsdaten bewegt wird, und das Kraftfahrzeug entlang der Trajektorie zur Durchführung des Fahrmanövers bewegt wird.

Aus der Offenlegungsschrift US 2010/0156672 A1 ist ein System für automatisiertes Valet Parking bekannt. Hierbei wird ein Stellplatz für ein Zielfahrzeugs unter einer Vielzahl von Stellplätzen, die auf einem Parkplatz gebildet sind, auf der Grundlage von Situationsinformationen über den Parkplatz ausgewählt, und ein Bewegungspfad auf der Grundlage von Informationen über den aktuellen Standort des Zielfahrzeugs und Informationen über den Stellplatz berechnet. Das Zielfahrzeug wird automatisch auf dem ermittelten Stellplatz geparkt, indem es sich entlang des Bewegungspfads bewegt.

Aus der Offenlegungsschrift DE 10 2012 021 282 A1 ist ein Verfahren zur Koordination des Betriebs von vollautomatisiert fahrenden Fahrzeugen bekannt. Es werden für die einzelnen Kraftfahrzeuge Trajektoriendaten von abzufahrenden Trajektorien ermittelt und anschließend auf einen Konflikt überprüft.

Aus der Offenlegungsschrift EP 2695797 A2 ist ein Verfahren zum fahrerlosen Bewegen eines Fahrzeugs auf einer Parkfläche, mittels einer externen Steuerungseinrichtung, der ein Zugriff auf das Fahrzeugermöglicht wird, bekannt, um das Fahrzeug zu oder von einem zugewiesenen Stellplatz der Parkfläche zu steuern. Dabei wird eine bevorstehende oder stattgefundene Kollision mit einem anderen fahrenden oder parkenden Fahrzeug mittels wenigstens eines Sensors des Fahrzeugs detektiert und es erfolgt ein situationsabhängiges Treffen einer Verhaltensentscheidung durch die Steuerungseinrichtung.

### Offenbarung der Erfindung

Die der Erfindung zugrunde liegende Aufgabe ist darin zu sehen, ein effizientes Konzept zum effizienten fahrerlosen Führen eines Kraftfahrzeugs innerhalb eines Parkplatzes bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum fahrerlosen Führen eines Kraftfahrzeugs innerhalb eines Parkplatzes bereitgestellt, umfassend die folgenden Schritte:
- Erfassen eines oder mehrerer sich innerhalb des Parkplatzes befindender Verkehrsteilnehmer,
- Prädizieren einer jeweiligen Bewegung des einen oder der mehreren Verkehrsteilnehmer,
- automatisches fahrerloses Führen des Kraftfahrzeugs innerhalb des Parkplatzes basierend auf der jeweiligen prädizierten Bewegung.

Nach einem anderen Aspekt wird eine Vorrichtung zum fahrerlosen Führen eines Kraftfahrzeugs innerhalb eines Parkplatzes bereitgestellt, umfassend:
- eine Erfassungseinrichtung zum Erfassen eines oder mehrerer sich innerhalb des Parkplatzes befindender Verkehrsteilnehmer,
- eine Prädizierungseinrichtung zum Prädizieren einer jeweiligen Bewegung des einen oder der mehreren Verkehrsteilnehmer,
- eine automatische Führungseinrichtung zum automatischen fahrerlosen Führen des Kraftfahrzeugs innerhalb des Parkplatzes basierend auf der jeweiligen prädizierten Bewegung.

Nach einem weiteren Aspekt, welcher nicht Teil der Erfindung ist, wird ein Parkplatz für Kraftfahrzeuge bereitgestellt, der die Vorrichtung zum fahrerlosen Führen eines Kraftfahrzeugs innerhalb eines Parkplatzes umfasst.

Gemäß einem weiteren Aspekt wird ein Computerprogramm bereitgestellt, welches Programmcode zur Durchführung des Verfahrens zum fahrerlosen Führen eines Kraftfahrzeugs innerhalb eines Parkplatzes umfasst, wenn das Computerprogramm auf einem Computer ausgeführt wird.

Die Erfindung umfasst also insbesondere und unter anderem den Gedanken, auf Basis einer wahrscheinlichen Bewegung der Verkehrsteilnehmer das Kraftfahrzeug automatisch fahrerlos innerhalb des Parkplatzes zu führen. Dadurch wird insbesondere der technische Vorteil bewirkt, dass das Kraftfahrzeug effizient fahrerlos geführt werden kann. Denn so ist es beispielsweise in vorteilhafter Weise ermöglicht, basierend auf der jeweiligen prädizierten Bewegung das Kraftfahrzeug derart automatisch fahrerlos zu führen, dass das Kraftfahrzeug bei seiner Bewegung innerhalb des Parkplatzes einen vorbestimmten Mindestabstand zum entsprechenden Verkehrsteilnehmer einhalten wird. Dadurch kann zum Beispiel in vorteilhafter Weise ein Kollisionsrisiko verringert werden.

Insbesondere ist es aufgrund des erfindungsgemäßen Konzepts ermöglicht, dass innerhalb eines Parkplatzes ein Mischbetrieb aus fahrerlos geführten Kraftfahrzeugen und manuell geführten Kraftfahrzeugen respektive Personen stattfinden kann. Das heißt also, dass fahrerlos geführte Kraftfahrzeuge und manuell geführte Kraftfahrzeuge respektive Personen gleichzeitig den Parkplatz benutzen können. Dadurch kann in vorteilhafter Weise ein effizienter Betrieb des Parkplatzes gewährleistet werden.

Ein Parkplatz im Sinne der vorliegenden Erfindung bildet eine Abstellfläche für Fahrzeuge, die mehrere Stellplätze (bei einem Parkplatz auf privatem Grund) oder Parkstände (bei einem Parkplatz auf öffentlichem Grund) aufweist. Der Parkplatz ist nach einer Ausführungsform als ein Parkhaus ausgebildet. Der Parkplatz ist nach einer Ausführungsform als eine Garage ausgebildet.

Fahrzeuge im Sinne der vorliegenden Erfindung sind Kraftfahrzeuge.

Die Formulierung "respektive" umfasst insbesondere die Formulierung "und/oder".

Ein automatisches fahrerloses Führen des Kraftfahrzeugs umfasst nach einer Ausführungsform, welche nicht Teil der Erfindung ist, dass das Kraftfahrzeug ferngesteuert wird.

Ein automatisches fahrerloses Führen des Kraftfahrzeugs umfasst nach einer Ausführungsform, dass das Kraftfahrzeug autonom, also selbstständig, innerhalb des Parkplatzes fährt.

Nach einer Ausführungsform, welche nicht Teil der Erfindung ist, umfasst das automatische fahrerlose Führen des Kraftfahrzeugs, dass das Kraftfahrzeug eine Teilstrecke innerhalb des Parkplatzes autonom fährt und eine weitere Teilstrecke innerhalb des Parkplatzes ferngesteuert wird.

Das Fernsteuern des Kraftfahrzeugs, was nicht Teil der Erfindung ist, umfasst insbesondere, dass ein oder mehrere Fernsteuerungsbefehle über ein Kommunikationsnetzwerk an das Kraftfahrzeug gesendet werden.

Sofern das Kraftfahrzeug autonom innerhalb des Parkplatzes fahren soll, ist nach einer Ausführungsform vorgesehen, dass das automatische fahrerlose Führen umfasst, dass Daten, die das Kraftfahrzeug für die autonome Fahrt benötigt, über ein Kommunikationsnetzwerk an das Kraftfahrzeug gesendet werden. Solche Daten umfassen zum Beispiel folgende Daten: Soll-Trajektoriendaten einer Soll-Trajektorie, die das Kraftfahrzeug abfahren soll, Zielpositionsdaten einer Zielposition, zu der das Kraftfahrzeug fahren soll, Korrekturdaten für eine Korrektur-Soll-Trajektorie, damit das Kraftfahrzeug zurück auf seine abzufahrende Soll-Trajektorie gelangen kann.

Ein Verkehrsteilnehmer im Sinne der vorliegenden Erfindung bezeichnet insbesondere eine Person, zum Beispiel einen Fußgänger. Ein Verkehrsteilnehmer im Sinne der vorliegenden Erfindung bezeichnet insbesondere ein Kraftfahrzeug, welches manuell geführt wird. Ein Verkehrsteilnehmer im Sinne der vorliegenden Erfindung bezeichnet insbesondere ein Tier, welches sich innerhalb des Parkplatzes befindet. Das heißt also, dass Verkehrsteilnehmer im Sinne der vorliegenden Erfindung lebende Objekte sind, also zum Beispiel eine Person oder ein Tier, oder Objekte sind, die ein lebendes Objekt umfassen, zum Beispiel das Kraftfahrzeug, welches manuell geführt wird, also in welchem sich ein menschlicher Fahrer befindet.

Prädizieren bezeichnet insbesondere das Durchführen einer Prädiktion. Eine Prädiktion umfasst insbesondere eine Aussage über einen zukünftigen Aufenthaltsort des Verkehrsteilnehmers respektive eine zukünftige Bewegung des Verkehrsteilnehmers. Das heißt also zum Beispiel, dass das Prädizieren umfasst, dass ermittelt oder bestimmt wird, welche Bewegung der Verkehrsteilnehmer zukünftig durchführen wird.

Nach einer Ausführungsform ist vorgesehen, dass das Erfassen des einen oder der mehreren erfassten Verkehrsteilnehmer ein Erfassen eines manuell geführten zu parkenden Kraftfahrzeugs umfasst, wobei das Prädizieren der Bewegung des manuell geführten zu parkenden Kraftfahrzeugs umfasst, dass eine Parkposition des Parkplatzes für das manuell geführte zu parkende Kraftfahrzeug bestimmt wird, an welcher das manuell geführte zu parkenden Kraftfahrzeug mit einer vorbestimmten Wahrscheinlichkeit parken will, wobei das automatische fahrerlose Führen des Kraftfahrzeugs basierend auf der bestimmten Parkposition durchgeführt wird.

Dadurch wird insbesondere der technische Vorteil bewirkt, dass das Kraftfahrzeug effizient fahrerlos geführt werden kann. Dies nun insbesondere in Abhängigkeit von der bestimmten Parkposition, an oder auf welcher das manuell geführte Kraftfahrzeug mit einer vorbestimmten Wahrscheinlichkeit parken wird. So kann zum Beispiel vorgesehen sein, dass das Kraftfahrzeug automatisch fahrerlos derart geführt wird, dass es nicht an der bestimmten Parkposition vorbeifährt und somit nicht durch einen Einparkvorgang des manuell geführten Kraftfahrzeugs behindert wird.

Nach einer Ausführungsform ist vorgesehen, dass das manuell geführte zu parkende Kraftfahrzeug bei einem Einfahren des manuell geführten zu parkenden Kraftfahrzeugs in den Parkplatz erfasst wird. Das heißt also, dass, sofern ein manuell geführtes Kraftfahrzeug bei einem Einfahren in den Parkplatz erfasst wird, davon ausgegangen werden kann, dass dieses manuell geführte Kraftfahrzeug an oder auf einer Parkposition innerhalb des Parkplatzes geparkt werden soll.

Nach einer Ausführungsform ist vorgesehen, dass das Prädizieren der Bewegung des manuell geführten zu parkenden Kraftfahrzeugs umfasst, dass eine Fahrzeit des manuell geführten zu parkenden Kraftfahrzeugs zur bestimmten Parkposition ermittelt wird und/oder das eine Einparkzeit des manuell geführten zu parkenden Kraftfahrzeugs in die bestimmte Parkposition ermittelt wird, wobei das automatische fahrerlose Führen des Kraftfahrzeugs basierend auf der ermittelten Fahrzeit respektive der ermittelten Einparkzeit durchgeführt wird.

Dadurch wird insbesondere der technische Vorteil bewirkt, dass das Kraftfahrzeug effizient automatisch fahrerlos geführt werden kann. Dies nun in Abhängigkeit von der bestimmten oder ermittelten Fahrzeit respektive der ermittelten Einparkzeit. So kann also basierend auf der ermittelten Einparkzeit berechnet oder ermittelt werden, ob das manuell geführte Kraftfahrzeug bereits eingeparkt ist, also bereits parkt, wenn das automatisch fahrerlos geführte Kraftfahrzeug an der bestimmten Parkposition vorbeifahren wird. Sofern also das manuell geführte Kraftfahrzeug bereits eingeparkt ist respektive eingeparkt haben wird, wenn das automatisch fahrerlos geführte Kraftfahrzeug an der bestimmten Parkposition vorbeifährt, so wird von einer Umleitung des automatischen fahrerlos geführten Kraftfahrzeugs abgesehen.

Eine Einparkzeit bezeichnet eine Zeit, die das manuell geführte zu parkende Kraftfahrzeug benötigt, um in die bestimmte Parkposition einzuparken.

Die Fahrzeit des manuell geführten zu parkenden Kraftfahrzeugs zur bestimmten Parkposition bezeichnet die Zeit, die das manuell geführte zu parkende Kraftfahrzeug benötigt, um von seiner momentanen Position zur bestimmten Parkposition zu gelangen.

Nach einer weiteren Ausführungsform ist vorgesehen, dass eine Größe des erfassten manuell geführten zu parkenden Kraftfahrzeugs ermittelt wird, wobei das Bestimmen der Parkposition basierend auf der ermittelten Größe durchgeführt wird.

Dadurch wird insbesondere der technische Vorteil bewirkt, dass die Parkposition effizient bestimmt werden kann. Denn so können bei der Bestimmung der Parkposition diejenigen Parkpositionen des Parkplatzes außer Betracht bleiben, die aufgrund ihrer Größe nicht für das manuell geführte zu parkende Kraftfahrzeug geeignet sind.

Gemäß einer weiteren Ausführungsform ist vorgegeben, dass eine Zuordnungsparktabelle vorgegeben wird, die angibt, welche Parkpositionen des Parkplatzes mit welcher Häufigkeit von Kraftfahrzeugen zum Parken genutzt werden, wobei das Bestimmen der Parkposition basierend auf der Zuordnungsparktabelle durchgeführt wird.

Dadurch wird insbesondere der technische Vorteil bewirkt, dass die Parkposition effizient bestimmt werden kann.

Nach einer weiteren Ausführungsform ist vorgesehen, dass das Erfassen des einen oder der mehreren erfassten Verkehrsteilnehmer ein Erfassen eines manuell geführten auszuparkenden Kraftfahrzeugs umfasst, wobei das Prädizieren der Bewegung des manuell geführten auszuparkenden Kraftfahrzeugs umfasst, dass eine Ausparkzeit des manuell geführten auszuparkenden Kraftfahrzeugs aus seiner Parkposition ermittelt wird und/oder dass eine Fahrzeit des manuell geführten auszuparkenden Kraftfahrzeugs von seiner Parkposition zu einer Ausfahrt des Parkplatzes ermittelt wird, wobei das automatische fahrerlose Führen des Kraftfahrzeugs basierend auf der ermittelten Ausparkzeit respektive der ermittelten Fahrzeit durchgeführt wird.

Dadurch wird insbesondere der technische Vorteil bewirkt, dass das automatische fahrerlose Führen des Kraftfahrzeugs effizient durchgeführt werden kann. Dies nun in Abhängigkeit von der ermittelten Ausparkzeit respektive der ermittelten Fahrzeit. So kann also basierend auf der ermittelten Ausparkzeit ermittelt oder berechnet werden, ob das automatisch fahrerlos geführte Kraftfahrzeug genau zu dem Zeitpunkt an der Parkposition vorbeikommt, an welchem das manuell geführte auszuparkende Kraftfahrzeug noch mit einem Ausparkvorgang beschäftigt ist. Dies könnte zu einem Blockieren des Kraftfahrzeugs führen. In einem solchen Fall ist nach einer Ausführungsform vorgesehen, dass das automatisch fahrerlos geführte Kraftfahrzeug umgeleitet wird.

Das automatische fahrerlose Führen des Kraftfahrzeugs umfasst nach einer Ausführungsform, dass eine Längsgeschwindigkeit des Kraftfahrzeugs verringert wird. Das Kraftfahrzeug fährt also langsamer. Dies insbesondere basierend auf der ermittelten Ausparkzeit respektive der ermittelten Fahrzeit. Somit kann zum Beispiel in vorteilhafter Weise sichergestellt werden, dass das andere Kraftfahrzeug bereits ausgeparkt hat, wenn das Kraftfahrzeug an der Parkposition des anderen Kraftfahrzeugs vorbeifahren soll.

Das automatische fahrerlose Führen des Kraftfahrzeugs umfasst nach einer Ausführungsform, dass ein Zeitpunkt, zu welcher das Kraftfahrzeug zu einer Parkposition losfährt, an welcher das Kraftfahrzeug parken soll, basierend auf der ermittelten Ausparkzeit respektive der ermittelten Fahrzeit ermittelt oder bestimmt wird. Das heißt also, dass das Kraftfahrzeug noch mit dem Losfahren zu seiner Parkposition wartet, bis der bestimmte Zeitpunkt gekommen ist. Somit kann zum Beispiel in vorteilhafter Weise sichergestellt werden, dass das andere Kraftfahrzeug bereits ausgeparkt hat, wenn das Kraftfahrzeug an der Parkposition des anderen Kraftfahrzeugs vorbeifahren soll.

Die Ausparkzeit bezeichnet die Zeit, die das manuell geführte auszuparkende Kraftfahrzeug benötigt, um aus seiner Parkposition auszuparken, also um seine Parkposition zu verlassen.

Die Fahrzeit des manuell geführten auszuparkenden Kraftfahrzeugs von seiner Parkposition zu einer Ausfahrt des Parkplatzes bezeichnet die Zeit, die das Kraftfahrzeug für eine Fahrt von der Parkposition zur Ausfahrt des Parkplatzes benötigt.

Gemäß einer weiteren Ausführungsform ist vorgesehen, dass das Erfassen des einen oder der mehreren erfassten Verkehrsteilnehmer ein Erfassen eines Fußgängers umfasst, wobei das Prädizieren der Bewegung des Fußgängers umfasst, dass ein innerhalb des Parkplatzes parkendes Kraftfahrzeug bestimmt wird, zu welchem der Fußgänger mit einer vorbestimmten Wahrscheinlichkeit gehen wird, wobei das automatische fahrerlose Führen des Kraftfahrzeugs basierend auf einer Parkposition des bestimmten Kraftfahrzeugs durchgeführt wird.

Dadurch wird insbesondere der technische Vorteil bewirkt, dass das Kraftfahrzeug effizient automatisch fahrerlos geführt werden kann. Dies basierend auf der Parkposition des bestimmten Kraftfahrzeugs, zu welchem der Fußgänger mit einer vorbestimmten Wahrscheinlichkeit gehen wird. Denn dadurch ist insbesondere in vorteilhafter Weise bekannt, dass in absehbarer Zeit dieses Kraftfahrzeug aus seiner Parkposition ausparken wird und somit gegebenenfalls das automatisch fahrerlos geführte Kraftfahrzeug bei seiner Fahrt innerhalb des Parkplatzes behindern könnte. Entsprechend kann dann eine Soll-Trajektorie für das automatische fahrerlos geführte Kraftfahrzeug angepasst werden.

Erfindungsgemäß ist vorgesehen, dass das Erfassen des einen oder der mehreren erfassten Verkehrsteilnehmer ein Erfassen eines Fußgängers umfasst, wobei eine Zuordnungsfußwegtabelle vorgegeben wird, die angibt, welche Fußwege innerhalb des Parkplatzes mit welcher Häufigkeit von Fußgängern genutzt werden, wobei das Prädizieren der Bewegung des Fußgängers basierend auf der Zuordnungsfußwegtabelle durchgeführt wird.

Dadurch wird insbesondere der technische Vorteil bewirkt, dass das Prädizieren der Bewegung effizient durchgeführt werden kann. Dies nun abhängig von der Zuordnungsfußwegtabelle.

Erfindungsgemäß ist vorgesehen, dass die Vorrichtung zum fahrerlosen Führen eines Kraftfahrzeugs innerhalb eines Parkplatzes eingerichtet oder ausgebildet ist, das Verfahren zum fahrerlosen Führen eines Kraftfahrzeugs innerhalb eines Parkplatzes aus- oder durchzuführen.

Erfindungsgemäß ist vorgesehen, dass das Verfahren zum fahrerlosen Führen eines Kraftfahrzeugs innerhalb eines Parkplatzes mittels der Vorrichtung zum fahrerlosen Führen eines Kraftfahrzeugs innerhalb eines Parkplatzes aus- oder durchgeführt wird.

Eine Erfassungseinrichtung umfasst nach einer Ausführungsform einen oder mehrere Umfeldsensoren. Ein Umfeldsensor ist zum Beispiel einer der folgenden Umfeldsensoren: Videosensor, Radarsensor, Lidarsensor, Lasersensor, Ultraschallsensor und Magnetsensor.

Erfindungsgemäß ist vorgesehen, dass das automatische fahrerlose Führen des Kraftfahrzeugs umfasst, dass basierend auf der jeweiligen prädizierten Bewegung eine Soll-Trajektorie für das Kraftfahrzeug ermittelt wird. Diese ermittelte Soll-Trajektorie wird erfindungsgemäß an das Kraftfahrzeug über ein Kommunikationsnetzwerk gesendet. Das Kraftfahrzeug kann somit basierend auf der Soll-Trajektorie autonom fahren.

Erfindungsgemäß umfasst das automatische fahrerlose Führen des Kraftfahrzeugs, dass basierend auf der jeweiligen prädizierten Bewegung eine Zielposition für das Kraftfahrzeug ermittelt wird, zu welcher das Kraftfahrzeug fahren soll. Die ermittelte Zielposition wird erfindungsgemäß an das Kraftfahrzeug über ein Kommunikationsnetzwerk gesendet. Das Kraftfahrzeug kann somit basierend auf der Zielposition autonom fahren, also insbesondere autonom zur Zielposition fahren.

Nach einer Ausführungsform, welche nicht Teil der Erfindung ist, ist vorgesehen, dass das automatische fahrerlose Führen des Kraftfahrzeugs umfasst, dass basierend auf der jeweiligen prädizierten Bewegung eine Soll-Trajektorie für das Kraftfahrzeug ermittelt wird, wobei das Kraftfahrzeug basierend auf der ermittelten Soll-Trajektorie ferngesteuert wird.

Nach einer Ausführungsform, welche nicht Teil der Erfindung ist, umfasst das automatische fahrerlose Führen des Kraftfahrzeugs, dass basierend auf der jeweiligen prädizierten Bewegung eine Zielposition für das Kraftfahrzeug ermittelt wird, zu welcher das Kraftfahrzeug fahren soll, wobei das Kraftfahrzeug basierend auf der ermittelten Zielposition ferngesteuert wird.

Eine Zielposition für das Kraftfahrzeug ist zum Beispiel eine Parkposition, an oder auf welcher das Kraftfahrzeug parken soll. Eine Zielposition ist zum Beispiel eine Abholposition des Parkplatzes, an welcher eine Person das Kraftfahrzeug nach dem automatischen fahrerlosen Führen abholen soll respektive kann.

Das automatische fahrerlose Führen des Kraftfahrzeugs ist nach einer Ausführungsform von einem automatischen Parkvorgang umfasst. Das heißt also, dass das Kraftfahrzeug einen automatischen Parkvorgang innerhalb des Parkplatzes durchführt. Dies basierend auf der jeweiligen prädizierten Bewegung. Ein automatischer Parkvorgang umfasst, dass das Kraftfahrzeug automatisch zu einer Parkposition fährt und sich dort abstellt. Das automatische Parken respektive der automatische Parkvorgang umfasst, dass das Kraftfahrzeug von der Parkposition zu einer Abholposition fährt.

Das Kommunikationsnetzwerk umfasst nach einer Ausführungsform ein WLAN-Kommunikationsnetzwerk und/oder ein Mobilfunkkommunikationsnetzwerk und/oder ein LoRa-Kommunikationsnetzwerk. "LoRa" steht für "Low-power widerange communication". Das LoRa-Kommunikationsnetzwerk bezeichnet also ein Kommunikationsnetzwerk nach dem LoRa-Standard.

In einer Ausführungsform wird respektive ist eine Kommunikation über das Kommunikationsnetzwerk verschlüsselt.

Das automatische fahrerlose Führen des Kraftfahrzeugs umfasst insbesondere eine Quer- und/oder eine Längsführung des Kraftfahrzeugs.

In einer Ausführungsform ist vorgesehen, dass das automatische fahrerlose Führen derart durchgeführt wird, dass zwischen dem fahrerlos geführten Kraftfahrzeug und den erfassten Verkehrsteilnehmern jeweils ein vorbestimmter Mindestabstand eingehalten wird. Das heißt, dass das Kraftfahrzeug derart automatisch fahrerlos geführt wird, dass das fahrerlos geführte Kraftfahrzeug bei seiner Fahrt innerhalb des Parkplatzes jeweils einen vorbestimmten Mindestabstand zu den erfassten Verkehrsteilnehmern aufweist oder einhält.

Technische Funktionalitäten der Vorrichtung ergeben sich analog aus entsprechenden technischen Funktionalitäten des Verfahrens und umgekehrt. Das heißt also, dass analog zu den entsprechenden Ausführungsformen des Verfahrens die Erfassungseinrichtung respektive die Prädizierungseinrichtung respektive die Führungseinrichtung ausgebildet sind, die entsprechenden Verfahrensschritte aus- oder durchzuführen.

Die Erfindung wird im Folgenden anhand von bevorzugten Ausführungsbeispielen näher erläutert. Hierbei zeigen
Fig. 1 ein Ablaufdiagramm eines Verfahrens zum fahrerlosen Führen eines Kraftfahrzeugs innerhalb eines Parkplatzes,
Fig. 2 eine Vorrichtung zum fahrerlosen Führen eines Kraftfahrzeugs innerhalb eines Parkplatzes und
Fig. 3 einen Parkplatz für Kraftfahrzeuge.

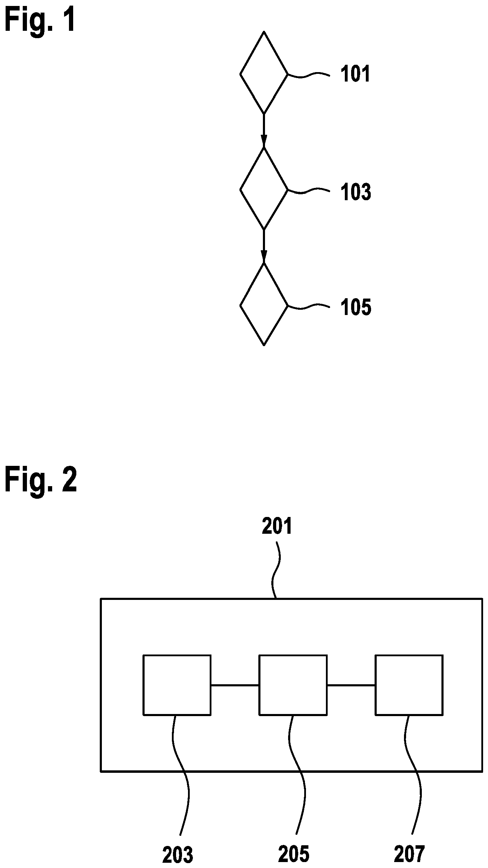

Fig. 1 zeigt ein Ablaufdiagramm eines Verfahrens zum fahrerlosen Führen eines Kraftfahrzeugs innerhalb eines Parkplatzes.

Das Verfahren umfasst die folgenden Schritte:
- Erfassen 101 eines oder mehrerer sich innerhalb des Parkplatzes befindender Verkehrsteilnehmer,
- Prädizieren 103 einer jeweiligen Bewegung des einen oder der mehreren Verkehrsteilnehmer,
- automatisches fahrerloses Führen 105 des Kraftfahrzeugs innerhalb des Parkplatzes basierend auf der jeweiligen prädizierten Bewegung.

Fig. 2 zeigt eine Vorrichtung 201 zum fahrerlosen Führen eines Kraftfahrzeugs innerhalb eines Parkplatzes.

Die Vorrichtung 201 umfasst:
- eine Erfassungseinrichtung 203 zum Erfassen eines oder mehrerer sich innerhalb des Parkplatzes befindender Verkehrsteilnehmer,
- eine Prädizierungseinrichtung 205 zum Prädizieren einer jeweiligen Bewegung des einen oder der mehreren Verkehrsteilnehmer,
- eine automatische Führungseinrichtung 207 zum automatischen fahrerlosen Führen des Kraftfahrzeugs innerhalb des Parkplatzes basierend auf der jeweiligen prädizierten Bewegung.

Die Vorrichtung 201 umfasst eine Kommunikationsschnittstelle zur Kommunikation mit dem Kraftfahrzeug über ein Kommunikationsnetzwerk. Zum Beispiel, was nicht Teil der Erfindung ist, ist die Kommunikationsschnittstelle ausgebildet, einen oder mehrere Fernsteuerungsbefehle an das Kraftfahrzeug über das Kommunikationsnetzwerk zu senden. Zum Beispiel ist die Kommunikationsschnittstelle ausgebildet, Daten, die das Kraftfahrzeug für eine autonome Fahrt innerhalb des Parkplatzes benötigt, an das Kraftfahrzeug über ein Kommunikationsnetzwerk zu senden.

Das heißt also, dass nach einer Ausführungsform die automatische Führungseinrichtung ausgebildet ist, basierend auf der jeweiligen prädizierten Bewegung einen oder mehrere solcher Fernsteuerungsbefehle zu ermitteln, was nicht Teil der Erfindung ist, respektive solche Daten zu ermitteln.

Nach einer Ausführungsform ist die Vorrichtung 201 von einem Parkplatzverwaltungssystem umfasst. Ein solches Parkplatzverwaltungssystem ist ausgebildet, einen Betrieb des Parkplatzes zu steuern respektive steuert einen Betrieb des Parkplatzes. Insbesondere steuert das Parkplatzverwaltungssystem einen automatischen Parkvorgang für Kraftfahrzeuge.

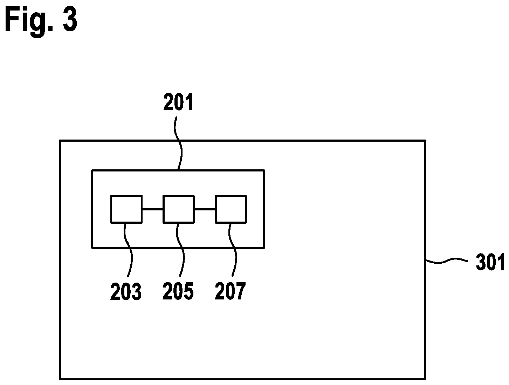

Fig. 3 zeigt einen Parkplatz 301 für Kraftfahrzeuge in einer vereinfachten schematischen Darstellung.

Der Parkplatz 301 umfasst die Vorrichtung 201 der Fig. 2. Der Parkplatz 301 umfasst zum Beispiel einen oder mehrere Umfeldsensoren zum Erfassen der Verkehrsteilnehmer. Der Parkplatz 301 umfasst mehrere nicht dargestellte Parkpositionen, also Parkstände oder Stellplätze.

Zusammenfassend stellt die Erfindung ein effizientes technisches Konzept bereit, mittels welchem auf Basis einer Kenntnis respektive einer Ermittlung eines wahrscheinlichen Fahrverhaltens von manuell geführten Kraftfahrzeugen respektive eines wahrscheinlichen Gehverhaltens von Personen, insbesondere Fußgängern, oder Tieren, eine Verkehrssteuerung von Kraftfahrzeugen, die automatisch fahrerlos geführt werden sollen respektive geführt werden, optimiert wird respektive werden kann.

Der erfindungsgemäße Grundgedanke ist zum Beispiel darin zu sehen, dass eine fahrerlose Fahrt des Kraftfahrzeugs von einer Abgabeposition, auch Dropzone genannt, zur Parkposition, die auch als eine Parkbucht ausgebildet sein kann, respektive dass ein Ausparkvorgang des Kraftfahrzeugs und eine Fahrt von der Parkposition zur Abholposition, die auch als eine Pick-up-Zone bezeichnet werden kann, respektive dass eine Umplanung einer momentan ausgeführten automatischen fahrerlos geführten Fahrt eines Kraftfahrzeugs von einem Parkplatzmanagement oder Parkplatzverwaltungssystem in Abhängigkeit von dem wahrscheinlichen Verhalten von manuell geführten Kraftfahrzeugen respektive Personen, also allgemein von Verkehrsteilnehmern, durchgeführt wird respektive werden. Dies bedeutet zum Beispiel, dass AVP-Vorgänge zum Beispiel so geplant werden, dass ein definierter Mindestabstand von dem fahrerlos geführten Kraftfahrzeug zu den Verkehrsteilnehmern eingehalten wird respektive mit einer vorbestimmten Wahrscheinlichkeit eingehalten wird.

AVP steht für "Automatic Valet Parking" und steht für "automatischer Parkvorgang". AVP-Kraftfahrzeuge sind also zum Beispiel Fahrzeuge, also Kraftfahrzeuge, die einen solchen automatischen Parkvorgang durchführen können respektive durchführen. AVP-Kraftfahrzeuge sind also Kraftfahrzeuge, die innerhalb eines Parkplatzes autonom fahren können respektive ferngesteuert werden können.

Durch das erfindungsgemäße Konzept kann zum Beispiel in vorteilhafter Weise erreicht werden, dass AVP-Kraftfahrzeuge möglichst ohne ein Bremsen und Anhalten, was zum Beispiel in einem ungünstigen Fall auf einer Rampe passieren könnte, ihre Aufgaben (automatisches Fahren und/oder automatisches Ein- respektive Ausparken) ausführen können.

Ein beispielhafter Ablauf des Verfahrens umfasst, dass die Vorrichtung, die zum Beispiel von einem Parkplatzverwaltungssystem umfasst ist,
- die wahrscheinlichen Zeiten der manuell geführten Fahrzeuge für deren Aufgaben (Fahrt, Ein-, Ausparken) ermittelt,
- basierend auf den ermittelten wahrscheinlichen Zeiten die Parameter (Startzeitpunkte, Geschwindigkeiten usw.) für die AVP-Vorgänge desjenigen Kraftfahrzeugs ermittelt, das automatisch fahrerlos geführt werden soll, und
- im Folgenden die AVP-Vorgänge startet, also das fahrerlose Führen startet, und/oder
- eine fahrerlose Fahrt eines AVP-Kraftfahrzeugs umplant basierend auf den ermittelten wahrscheinlichen Zeiten respektive anpasst an die ermittelten wahrscheinlichen Zeiten, es werden also zum Beispiel die Parameter für die AVP-Vorgänge, also das fahrerlose Fahren, angepasst respektive umgeplant, dies also insbesondere dann, wenn das AVP-Kraftfahrzeug bereits unterwegs ist, also bereits fahrerlos fährt.

In einer Ausführungsform, in welcher ein Kraftfahrzeug erfasst wird, welches einparken soll (also welches zu einer Parkposition, zum Beispiel zu einer Parkbucht, fahren und dort einparken soll), sind eine oder mehrere der folgenden Schritte vorgesehen:
- Erfassen eines manuell geführten Fahrzeugs an einer Einfahrt des Parkplatzes.
- Bestimmen der Parkposition, an welcher das Fahrzeug am wahrscheinlichsten parken wird.
- Ermitteln einer Zeit für die Fahrt des Fahrzeugs von der Einfahrt zur bestimmten Parkposition.
- Ermitteln einer Einparkzeit.

In einer Ausführungsform, in welcher ein auszuparkendes Fahrzeug erfasst wird (also ein Fahrzeug, welches aus seiner Parkposition ausgeparkt und zur Ausfahrt des Parkplatzes gefahren werden wird), sind eine oder mehrere der folgenden Schritte vorgesehen:
- Erfassen eines auszuparkenden Fahrzeugs.
- Ermitteln einer Ausparkzeit respektive eines Endzeitpunkts für das Ausparken.
- Ermitteln einer Fahrzeit von der Parkposition zur Ausfahrt des Parkplatzes.

In einer Ausführungsform, in welcher ein Fußgänger innerhalb des Parkplatzes erfasst wird, sind eine oder mehrere der folgenden Schritte vorgesehen:
- Erfassen eines zu einem Kraftfahrzeug gehenden Fußgängers (zum Beispiel kommt der Fußgänger von einem Treppenausgang).
- Ermitteln einer Fußgehzeit, die der Fußgänger zu seinem Kraftfahrzeug benötigt.
- Um zu bestimmen, zu welchem Kraftfahrzeug der Fußgänger gehen wird, wird zum Beispiel angenommen, dass der Fußgänger zum bezogen auf seine momentane Position am nächsten parkende Kraftfahrzeug gehen wird.
- Um zu bestimmen, zu welchem Kraftfahrzeug der Fußgänger gehen wird, wird zum Beispiel angenommen, dass der Fußgänger zum bezogen auf seine momentane Position am weitesten entfernt parkende Kraftfahrzeug gehen wird.
- Um zu bestimmen, zu welchem Kraftfahrzeug der Fußgänger gehen wird, wird zum Beispiel angenommen, dass der Fußgänger zum bezogen auf seine momentane Position zu einem parkenden Kraftfahrzeug gehen wird, welches mittig zwischen dem bezogen auf seine momentane Position am nächsten parkende Kraftfahrzeug und bezogen auf seine momentane Position am weitesten entfernt parkende Kraftfahrzeug liegt, gehen wird. Mittig bezeichnet insbesondere einen Bereich von 10 % bezogen auf das am weitesten entfernt parkende Kraftfahrzeug um die Mittenposition herum.
- Analog zu den vorstehenden Ausführungen wird auch für dieses Kraftfahrzeug, zu welchem der Fußgänger mit einer vorbestimmten Wahrscheinlichkeit gehen wird, eine Ausparkzeit respektive eine Fahrzeit von der Parkposition zur Ausfahrt ermittelt.

In einer Ausführungsform werden für Zeiten, wie sie im Rahmen dieser Beschreibung beschrieben sind, vorgegebene Zeiten verwendet. Die vorgegebenen Zeiten werden also nicht jedes Mal neu ermittelt, sondern sind zum Beispiel in einem Speicher hinterlegt.

In einer weiteren Ausführungsform sind die vorgegebenen Zeiten maximiert unter Berücksichtigung möglicher Komplikationen, um ausreichende Sicherheit zu erreichen.

In einer weiteren Ausführungsform wird bei der Ermittlung der Parkbucht berücksichtigt, welche Etagen, Parkbuchten usw. am beliebtesten sind. Dies zum Beispiel basierend auf hinterlegte und/oder basierend auf durch das Parkplatzverwaltungssystem ermittelte Daten.

In einer weiteren Ausführungsform wird bei der Ermittlung der Parkbucht berücksichtigt, welche Dimensionen das zu parkende Fahrzeug und die freien Parkbuchten haben. Das heißt, dass die erste Parkbucht zum Beispiel aufgrund der Dimensionen nicht wahrscheinlich bzw. möglich ist.

In einer weiteren Ausführungsform werden für die AVP-Planungen zudem die wahrscheinlichen Fußwege der Fahrer berücksichtigt. Zum Beispiel von der Parkbucht zu einem Ausgang. Das heißt zum Beispiel, dass geprüft wird, ob die wahrscheinlichen Fußwege einen AVP-Vorgang stören würden. Wenn ja, wird der AVP-Vorgang, also allgemein das fahrerlose Führen entsprechend angepasst.

## Patentansprüche

1. Verfahren zum fahrerlosen Führen eines Kraftfahrzeugs innerhalb eines Parkplatzes, umfassend die folgenden Schritte:
- Erfassen (101) eines oder mehrerer sich innerhalb des Parkplatzes befindender Verkehrsteilnehmer mittels einer Erfassungseinrichtung (203),
- Prädizieren (103) einer jeweiligen Bewegung des einen oder der mehreren Verkehrsteilnehmer mittels einer Prädizierungseinrichtung (205),
- automatisches fahrerloses Führen (105) des Kraftfahrzeugs innerhalb des Parkplatzes basierend auf der jeweiligen prädizierten Bewegung mittels einer automatische Führungseinrichtung (207), wobei das automatische fahrerlose Führen des Kraftfahrzeugs umfasst, dass basierend auf der jeweiligen prädizierten Bewegung
- eine Soll-Trajektorie für das Kraftfahrzeug ermittelt wird und an das Kraftfahrzeug über ein Kommunikationsnetzwerk gesendet wird, so dass das Kraftfahrzeug basierend auf der Soll-Trajektorie autonom oder ferngesteuert fährt und/oder
- eine Zielposition für das Kraftfahrzeug ermittelt wird und an das Kraftfahrzeug über ein Kommunikationsnetzwerk gesendet wird, so dass das Kraftfahrzeug der Zielposition autonom oder ferngesteuert fährt
so dass das Kraftfahrzeug bei seiner Bewegung innerhalb des Parkplatzes einen vorbestimmten Mindestabstand zu dem entsprechenden Verkehrsteilnehmer einhält,
wobei die Erfassungseinrichtung (203) und die Prädizierungseinrichtung (205) und die Führungseinrichtung (207) innerhalb des Parkplatzes ausgebildet sind,
**dadurch gekennzeichnet, dass** das Erfassen des einen oder der mehreren erfassten Verkehrsteilnehmer ein Erfassen eines Fußgängers umfasst, wobei eine Zuordnungsfußwegtabelle vorgegeben wird, die angibt, welche Fußwege innerhalb des Parkplatzes mit welcher Häufigkeit von Fußgängern genutzt werden, wobei das Prädizieren der Bewegung des Fußgängers basierend auf der Zuordnungsfußwegtabelle durchgeführt wird.

2. Verfahren nach Anspruch 1, wobei das Erfassen des einen oder der mehreren erfassten Verkehrsteilnehmer zusätzlich ein Erfassen eines manuell geführten zu parkenden Kraftfahrzeugs umfasst, wobei das Prädizieren der Bewegung des manuell geführten zu parkenden Kraftfahrzeugs umfasst, dass eine Parkposition des Parkplatzes für das manuell geführte zu parkende Kraftfahrzeug bestimmt wird, an welcher das manuell geführte zu parkende Kraftfahrzeug mit einer vorbestimmten Wahrscheinlichkeit parken wird, wobei das automatische fahrerlose Führen des Kraftfahrzeugs basierend auf der bestimmten Parkposition durchgeführt wird.

3. Verfahren nach Anspruch 2, wobei das Prädizieren der Bewegung des manuell geführten zu parkenden Kraftfahrzeugs umfasst, dass eine Fahrzeit des manuell geführten zu parkenden Kraftfahrzeugs zur bestimmten Parkposition ermittelt wird und/oder das eine Einparkzeit des manuell geführten zu parkenden Kraftfahrzeugs in die bestimmte Parkposition ermittelt wird, wobei das automatische fahrerlose Führen des Kraftfahrzeugs basierend auf der ermittelten Fahrzeit respektive der ermittelten Einparkzeit durchgeführt wird.

4. Verfahren nach Anspruch 2 oder 3, wobei eine Größe des erfassten manuell geführten zu parkenden Kraftfahrzeugs ermittelt wird, wobei das Bestimmen der Parkposition basierend auf der ermittelten Größe durchgeführt wird.

5. Verfahren nach einem der vorherigen Ansprüche 2 bis 4, wobei eine Zuordnungsparktabelle vorgegeben wird, die angibt, welche Parkpositionen des Parkplatzes mit welcher Häufigkeit von Kraftfahrzeugen zum Parken genutzt werden, wobei das Bestimmen der Parkposition basierend auf der Zuordnungsparktabelle durchgeführt wird.

6. Verfahren nach einem der vorherigen Ansprüche, wobei das Erfassen des einen oder der mehreren erfassten Verkehrsteilnehmer zusätzlich ein Erfassen eines manuell geführten auszuparkenden Kraftfahrzeugs umfasst, wobei das Prädizieren der Bewegung des manuell geführten auszuparkenden Kraftfahrzeugs umfasst, dass eine Ausparkzeit des manuell geführten auszuparkenden Kraftfahrzeugs aus seiner Parkposition ermittelt wird und/oder dass eine Fahrzeit des manuell geführten auszuparkenden Kraftfahrzeugs von seiner Parkposition zu einer Ausfahrt des Parkplatzes ermittelt wird, wobei das automatische fahrerlose Führen des Kraftfahrzeugs basierend auf der ermittelten Ausparkzeit respektive der ermittelten Fahrzeit durchgeführt wird.

7. Verfahren nach einem der vorherigen Ansprüche, wobei das Erfassen des einen oder der mehreren erfassten Verkehrsteilnehmer ein Erfassen eines Fußgängers umfasst, wobei das Prädizieren der Bewegung des Fußgängers umfasst, dass ein innerhalb des Parkplatzes parkendes Kraftfahrzeug bestimmt wird, zu welchem der Fußgänger mit einer vorbestimmten Wahrscheinlichkeit gehen wird, wobei das automatische fahrerlose Führen des Kraftfahrzeugs basierend auf einer Parkposition des bestimmten Kraftfahrzeugs durchgeführt wird.

8. Vorrichtung (201) zum fahrerlosen Führen eines Kraftfahrzeugs innerhalb eines Parkplatzes, umfassend:
- eine Erfassungseinrichtung (203) zum Erfassen eines oder mehrerer sich innerhalb des Parkplatzes befindenden Verkehrsteilnehmer,
- eine Prädizierungseinrichtung (205) zum Prädizieren einer jeweiligen Bewegung des einen oder der mehreren Verkehrsteilnehmer,
- eine automatische Führungseinrichtung (207) zum automatischen fahrerlosen Führen des Kraftfahrzeugs innerhalb des Parkplatzes basierend auf der jeweiligen prädizierten Bewegung,
- eine Kommunikationsschnittstelle zur Kommunikation mit dem Kraftfahrzeug über ein Kommunikationsnetzwerk, die ausgebildet ist, einen oder mehrere Fernsteuerungsbefehle und/oder Daten, die das Kraftfahrzeug für eine autonome Fahrt innerhalb des Parkplatzes benötigt, an das Kraftfahrzeug über ein Kommunikationsnetzwerk zu senden,
wobei die Vorrichtung ausgebildet ist, ein Verfahren zum fahrerlosen Führen eines Kraftfahrzeugs innerhalb des Parkplatzes nach einem der Ansprüche 1 bis 7 auszuführen.

9. Parkplatz (301) für Kraftfahrzeuge, umfassend die Vorrichtung (201) nach Anspruch 8.

10. Computerprogramm, umfassend Programmcode zur Durchführung des Verfahrens nach einem der Ansprüche 1 bis 7, wenn das Computerprogramm auf einem Computer ausgeführt wird.

## Claims

1. Method for driving a motor vehicle in a driverless manner within a car park, comprising the following steps:
- detecting (101) one or more road users that are within the car park by means of a detection device (203),
- predicting (103) a respective movement of the one or more road users by means of a prediction device (205),
- automatically driving (105) the motor vehicle in a driverless manner within the car park on the basis of the respective predicted movement by means of an automatic driving device (207), the automatic driverless driving of the motor vehicle comprising taking the respective predicted movement as a basis for
- determining a desired trajectory for the motor vehicle and sending said trajectory to the motor vehicle via a communication network, with the result that the motor vehicle drives autonomously or by remote control on the basis of the desired trajectory, and/or
- determining a target position for the motor vehicle and sending said position to the motor vehicle via a communication network, with the result that the motor vehicle drives autonomously or by remote control to the target position,
with the result that the motor vehicle maintains a predetermined minimum distance from the applicable road user while it is moving within the car park,
the detection device (203) and the prediction device (205) and the driving device (207) being designed to be within the car park,
**characterized in that** the detection of the one or more detected road users comprises detecting a pedestrian, an association footpath table being predefined that indicates which footpaths within the car park are used by pedestrians with what recurrence, the prediction of the movement of the pedestrian being performed on the basis of the association footpath table.

2. Method according to Claim 1, wherein the detection of the one or more detected road users additionally comprises detecting a manually driven motor vehicle that needs to be parked, the prediction of the movement of the manually driven motor vehicle that needs to be parked comprising ascertaining a parking position in the car park, for the manually driven motor vehicle that needs to be parked, at which the manually driven motor vehicle that needs to be parked will park with a predetermined probability, the automatic driverless driving of the motor vehicle being performed on the basis of the ascertained parking position.

3. Method according to Claim 2, wherein the prediction of the movement of the manually driven motor vehicle that needs to be parked comprises determining a driving time for driving the manually driven motor vehicle that needs to be parked to the ascertained parking position and/or comprises determining a parking time for parking the manually driven motor vehicle that needs to be parked in the ascertained parking position, the automatic driverless driving of the motor vehicle being performed on the basis of the determined driving time and/or the determined parking time.

4. Method according to Claim 2 or 3, wherein a size of the detected manually driven motor vehicle that needs to be parked is determined, the ascertainment of the parking position being performed on the basis of the determined size.

5. Method according to one of preceding Claims 2 to 4, wherein an association parking table is predefined that indicates which parking positions in the car park are used by motor vehicles for parking with what recurrence, the ascertainment of the parking position being performed on the basis of the association parking table.

6. Method according to one of the preceding claims, wherein the detection of the one or more detected road users additionally comprises detecting a manually driven motor vehicle that needs to unpark, the prediction of the movement of the manually driven motor vehicle that needs to unpark comprising determining an unparking time for unparking the manually driven motor vehicle that needs to unpark from its parking position and/or comprises determining a driving time for driving the manually driven motor vehicle that needs to unpark from its parking position to an exit of the car park, the automatic driverless driving of the motor vehicle being performed on the basis of the determined unparking time and/or the determined driving time.

7. Method according to one of the preceding claims, wherein the detection of the one or more detected road users comprises detecting a pedestrian, the prediction of the movement of the pedestrian comprising ascertaining a motor vehicle, which is parking within the car park, to which the pedestrian will go with a predetermined probability, the automatic driverless driving of the motor vehicle being performed on the basis of a parking position of the ascertained motor vehicle.

8. Apparatus (201) for driving a motor vehicle in a driverless manner within a car park, comprising:
- a detection device (203) for detecting one or more road users that are within the car park,
- a prediction device (205) for predicting a respective movement of the one or more road users,
- an automatic driving device (207) for automatically driving the motor vehicle in a driverless manner within the car park on the basis of the respective predicted movement,
- a communication interface for communicating with the motor vehicle via a communication network, which interface is designed to send one or more remote control commands and/or data that the motor vehicle needs for autonomous driving within the car park to the motor vehicle via a communication network,
the apparatus being designed to carry out a method for driving a motor vehicle in a driverless manner within the car park according to one of Claims 1 to 7.

9. Car park (301) for motor vehicles, comprising the apparatus (201) according to Claim 8.

10. Computer program, comprising program code for performing the method according to one of Claims 1 to 7 when the computer program is executed on a computer.

## Revendications

1. Procédé permettant de guider sans conducteur un véhicule à moteur à l'intérieur d'un parc de stationnement, comprenant les étapes suivantes :
- détecter (101) un ou plusieurs usagers de la route se trouvant à l'intérieur du parc de stationnement au moyen d'un dispositif de détection (203),
- prédire (103) un déplacement respectif desdits un ou plusieurs usagers de la route au moyen d'un dispositif de prédiction (205),
- guider automatiquement sans conducteur (105) le véhicule à moteur à l'intérieur du parc de stationnement sur la base du déplacement prédit respectif au moyen d'un dispositif de guidage automatique (207), dans lequel le guidage automatique sans conducteur du véhicule à moteur comprend, sur la base du mouvement prédit respectif, le fait que
- une trajectoire de consigne est déterminée pour le véhicule à moteur et est envoyée au véhicule à moteur par l'intermédiaire d'un réseau de communication, de sorte que le véhicule à moteur se déplace de manière autonome ou commandée à distance sur la base de la trajectoire de consigne, et/ou
- une position cible est déterminée pour le véhicule à moteur et est envoyée au véhicule à moteur par l'intermédiaire d'un réseau de communication, de sorte que le véhicule à moteur se déplace de manière autonome ou commandée à distance vers la position cible,
de sorte que le véhicule à moteur, lors de son déplacement à l'intérieur du parc de stationnement, maintient une distance minimale prédéterminée par rapport à l'usager de la route correspondant,
dans lequel le dispositif de détection (203) et le dispositif de prédiction (205) et le dispositif de guidage (207) sont mis en œuvre à l'intérieur du parc de stationnement,
**caractérisé en ce que** la détection desdits un ou plusieurs usagers de la route détectés comprend la détection d'un piéton, dans lequel
une table d'affectation des trajets à pied est prédéfinie, laquelle indique quels trajets à pied sont utilisés par des piétons à l'intérieur du parc de stationnement et à quelle fréquence, dans lequel la prédiction du déplacement du piéton est effectuée sur la base de la table d'affectation des trajets à pied.

2. Procédé selon la revendication 1, dans lequel la détection desdits un ou plusieurs usagers de la route détectés comprend en outre une détection d'un véhicule à moteur guidé manuellement pour se garer, dans lequel la prédiction du déplacement du véhicule à moteur guidé manuellement pour se garer comprend le fait qu'une position de stationnement du parc de stationnement est déterminée pour le véhicule à moteur guidé manuellement pour se garer, à laquelle le véhicule à moteur guidé manuellement pour se garer va se garer avec une probabilité prédéterminée, dans lequel le guidage automatique sans conducteur du véhicule à moteur est effectué sur la base de la position de stationnement déterminée.

3. Procédé selon la revendication 2, dans lequel la prédiction du déplacement du véhicule à moteur guidé manuellement pour se garer comprend le fait qu'un temps de conduite du véhicule à moteur guidé manuellement pour se garer vers la position de stationnement est déterminée et/ou qu'un temps de stationnement du véhicule à moteur guidé manuellement pour se garer à la position de stationnement est déterminée, dans lequel le guidage automatique sans conducteur du véhicule à moteur est effectué sur la base du temps de conduite déterminé ou du temps de stationnement déterminé.

4. Procédé selon la revendication 2 ou 3, dans lequel une taille du véhicule à moteur guidé manuellement pour se garer détecté est déterminée, dans lequel la détermination de la position de stationnement est effectuée sur la base de la taille déterminée.

5. Procédé selon l'une quelconque des revendications 2 à 4 précédentes, dans lequel une table d'affectation de stationnement est prédéfinie, laquelle indique quelles positions de stationnement du parc de stationnement sont utilisées par des véhicules à moteur pour se garer et à quelle fréquence, dans lequel la détermination de la position de stationnement est effectuée sur la base de la table d'affectation de stationnement.

6. Procédé selon l'une quelconque des revendications précédentes, dans lequel la détection desdits un ou plusieurs usagers de la route détectés comprend en outre une détection d'un véhicule à moteur guidé manuellement pour se garer, dans lequel la prédiction du déplacement du véhicule à moteur guidé manuellement pour se garer comprend le fait qu'un temps de sortie de stationnement du véhicule à moteur guidé manuellement pour se garer depuis sa position de stationnement est déterminé et/ou qu'un temps de conduite du véhicule à moteur guidé manuellement pour se garer depuis sa position de stationnement jusqu'à une sortie du parc de stationnement est déterminé, dans lequel le guidage automatique sans conducteur du véhicule à moteur est effectué sur la base du temps de sortie de stationnement déterminé ou du temps de conduite déterminé.

7. Procédé selon l'une quelconque des revendications précédentes, dans lequel la détection desdits un ou plusieurs usagers de la route détectés comprend une détection d'un piéton, dans lequel la prédiction du déplacement du piéton comprend le fait qu'un véhicule à moteur stationné à l'intérieur du parc de stationnement vers lequel le piéton va se déplacer avec une probabilité prédéterminée est déterminé, dans lequel le guidage automatique sans conducteur du véhicule à moteur est effectué sur la base d'une position de stationnement du véhicule à moteur déterminé.

8. Dispositif (201) permettant de guider sans conducteur un véhicule à moteur à l'intérieur d'un parc de stationnement, comprenant :
- un dispositif de détection (203) pour détecter un ou plusieurs usagers de la route se trouvant à l'intérieur du parc de stationnement,
- un dispositif de prédiction (205) pour prédire un déplacement respectif desdits un ou plusieurs usagers de la route,
- un dispositif de guidage automatique (207) pour guider automatiquement sans conducteur le véhicule à moteur à l'intérieur du parc de stationnement sur la base du déplacement prédit respectif,
- une interface de communication pour communiquer avec le véhicule à moteur par l'intermédiaire d'un réseau de communication, qui est conçue pour envoyer au véhicule à moteur, par l'intermédiaire d'un réseau de communication, une ou plusieurs instructions de commande à distance et/ou des données qui sont nécessaires au véhicule à moteur pour une conduite autonome à l'intérieur du parc de stationnement,
dans lequel le dispositif est conçu pour mettre en œuvre un procédé permettant de guider sans conducteur un véhicule à moteur à l'intérieur du parc de stationnement selon l'une quelconque des revendications 1 à 7.

9. Parc de stationnement (301) pour véhicules à moteur, comprenant le dispositif (201) selon la revendication 8.

10. Programme d'ordinateur comprenant un code de programme pour la mise en œuvre du procédé selon l'une quelconque des revendications 1 à 7, lorsque le programme d'ordinateur est exécuté sur un ordinateur.
